(19) Europäisches Patentamt / European Patent Office / Office européen des brevets

(11) **EP 2 818 665 A1**

(12) **EUROPEAN PATENT APPLICATION**
published in accordance with Art. 153(4) EPC

(43) Date of publication:
**31.12.2014 Bulletin 2015/01**

(51) Int Cl.:
**F02C 1/05** *(2006.01)*  **F02C 7/143** *(2006.01)*

(21) Application number: **12869565.7**

(22) Date of filing: **24.02.2012**

(86) International application number:
**PCT/JP2012/001260**

(87) International publication number:
**WO 2013/124899 (29.08.2013 Gazette 2013/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Hitachi, Ltd.**
**Tokyo 100-8280 (JP)**

(72) Inventors:
• **KOYAMA, Kazuhito**
  **Kanagawa 220-8401 (JP)**

• **KUSUMI, Naohiro**
  **Chiyoda-ku, Tokyo 100-8280 (JP)**
• **HATAMIYA, Shigeo**
  **Chiyoda-ku, Tokyo 100-8280 (JP)**
• **TAKAHASHI, Fumio**
  **Chiyoda-ku, Tokyo 100-8280 (JP)**
• **SEKIAI, Takaaki**
  **Chiyoda-ku, Tokyo 100-8280 (JP)**

(74) Representative: **MERH-IP**
**Matias Erny Reichl Hoffmann**
**Paul-Heyse-Strasse 29**
**80336 München (DE)**

(54) **SOLAR HEAT ASSISTED GAS TURBINE SYSTEM**

(57) It is an object of the present invention to provide a solar assisted gas turbine system which has a largely reduced number of heat collectors and a reduced installation area required for installation of the heat collectors.

The solar assisted gas turbine system of the invention is characterized by including: a gas turbine unit 100 having a compressor 1 for compressing air, a combustor 3 for putting the air compressed by the compressor and a fuel into combustion, and a turbine 2 driven by a combustion gas generated in the combustor; a heat collector 200 for collecting solar heat and forming high-pressure hot water; a heat storage tank 57 for storing the heating medium raised in temperature; a heat-exchanger 24 for performing heat exchange between the heating medium and water to form hot water; and an atomizer 300 by which the hot water formed by the heat-exchanger is sprayed into the air to be taken into the compressor.

FIG. 1

**Description**

Technical Field

The present invention relates to a solar assisted gas turbine system which utilizes solar thermal energy for a gas turbine.

Background Art

It is demanded in recent years that carbon dioxide ($CO_2$), which is one of global warming substances, be minimized in emission level. Under such a trend, attention is now focused on power-generating systems utilizing renewable energy. Typical examples of renewable energy include water energy, wind energy, geothermal energy, and solar (light/heat) energy. Among such energy, the solar heat is especially utilized in those power-generating systems which are under growingly vigorous technical development. For the solar thermal power-generating systems, generally a steam turbine is driven by steam generated through collection of heat by heat collectors. An example of this kind of conventional technology is described in Patent Document 1.

In contrast, gas turbine systems are present as ones that use fossil resources such as natural gas and petroleum as fuel. It is known that in the gas turbine systems the quantity of air taken into a compressor under the conditions where atmospheric temperature rises in summer decreases, which is accompanied by a lowering in power generating output. The technology disclosed in Patent Document 2 is one example of measures for restraining the lowering in output resulting from the rise in atmospheric temperature. Specifically, the technology disclosed in Patent Document 2 concerns gas turbine power-generating systems based on the HAT (Humid Air Turbine) cycle, which is one of regenerative cycles. In such a gas turbine power-generating system, an atomizer installed at the compressor inlet uses boiling under reduced-pressure to atomize high-pressure high-temperature water formed in the cycle (i.e., an aftercooler at a compressor outlet, which is an apparatus intrinsic in regenerative cycle; a humidifier for humidifying compressed air; and a heat-exchanger for heating the water humidified by the humidifier).

Prior Art Documents

Patent Documents

**[0004]**

　　Patent Document 1: JP-2008-39367-A
　　Patent Document 2: JP-2001-214757-A

Summary of the Invention

Problem to be Solved by the Invention

Meanwhile, the aforementioned solar thermal power-generating system needs a heat collector for collection of solar heat as a heat source for steam. There exist various heat collection systems, such as the trough-type system in which heat is collected by condensing solar light onto a heat collection tube installed in front of curved surface mirrors, and the tower-type system in which solar light reflected by a plurality of planar mirrors called heliostats is condensed onto a tower. Irrespective of the heat collection systems, however, a tremendous number of heat collectors (reflectors) are needed for enhancing the efficiency (temperature) and output of the steam turbine. This means that there is a need for vast areas to install the heat collectors. For instance, it is said that the area that power-generating equipment with an output of 50 MW needs for installation of the heat collectors is 1.2 $km^2$.

In paying attention to the solar thermal power-generating system in terms of cost, the proportion of the light/heat collectors based on the whole system is as much as about 80% in the status quo, because a huge number of heat collectors is installed. For achieving a reduction in cost, therefore, it is necessary to significantly reduce the number of installation of the heat collectors. However, reducing the number of installation of heat collectors is contradictory to the purpose of enhancing the efficiency and output of the solar thermal power-generating systems.

It is an object of the present invention to provide a solar assisted gas turbine system having a reduced number of heat collectors and a reduced installation area needed for the heat collectors.

Means for Solving the Problem

To achieve the above object, according to the present invention, there is provided a solar assisted gas turbine system characterized by including:

> a gas turbine including a compressor which compresses air, a combustor which puts the air compressed by the compressor and a fuel into combustion, and a turbine driven by a combustion gas generated in the combustor;
> a heat collector which collects solar heat and raises the temperature of a heating medium;
> a heat storage tank which stores the heating medium raised in temperature;
> a heat-exchanger which performs heat exchange between the heating medium and water to form hot water; and
> an atomizer which sprays the hot water formed by the heat-exchanger into the air taken into the compressor.

Effect of the Invention

According to the present invention, there can be provided a solar assisted gas turbine system which has a reduced number of heat collectors and a reduced installation area required for the heat collectors.

Brief Description of the Drawings

> FIG. 1 is a block diagram of a solar assisted gas turbine system (Example 1).
> FIG. 2 is an atmospheric temperature-power generator output characteristic chart of a conventional type gas turbine power-generating system.
> FIG. 3 is an illustration of a compressor inlet air cooling in the solar assisted gas turbine system.
> FIG. 4 is a diagram showing the relationship of water temperature with saturation pressure and an exemplary operating pressure.
> FIG. 5 is a block diagram of a solar assisted gas turbine system (Example 2).
> FIG. 6 is a diagram showing temperature distribution of compressed air inside a compressor.
> FIG. 7 is a diagram showing the relationship between air temperature and absolute humidity in a compression process.
> FIG. 8 is a diagram showing the relationship between intake air temperature and intake air weight flow rate.
> FIG. 9 shows comparison diagrams of heat cycles.
> FIG. 10 is a detailed structural view of a gas turbine.
> FIG. 11 shows diagrams showing the relationship between water droplet spraying rate and gas turbine output rise ratio.
> FIG. 12 is a diagram illustrating the differential compressor outlet temperature before and after atomization.

Mode for Carrying Out the Invention

First, how investigations had been made by the present inventors until the present invention was reached and a basic idea of the present invention will be described below.
In investigating reductions in the number of and the installation area for heat collectors, the present inventors made comprehensive investigations of a whole system including not only the heat collectors (for collection of solar heat) but also solar heat utilizing apparatuses (power-generating equipment). First of all, in a steam turbine system using as a heat source the heat collectors in an ordinary fashion, which serves as a base for the investigations, it is necessary to generate a steam of several hundred degrees Centigrade (e.g., about 300°C) as a heat source for the driving steam. Here, paying attention to the evaporation process of water, a large quantity of heat as evaporation latent heat (also called latent heat of vaporization or heat of vaporization) is necessary for the state change of water into steam. For instance, the potential heat content of 300°C steam is made up of sensible heat from room temperature (15°C) to 100°C, the latent heat of evaporation at 100°C, and sensible heat from 100°C steam to 300°C steam. The proportions of the three heat contents are 1.3%: 83.8%: 14.9%. Thus, the evaporation latent heat accounts for not less than 80% of the whole potential heat content. Accordingly, the steam turbine system can be said to be a system which, in principle, needs steam and, hence, needs a large quantity of energy as evaporation latent heat for generation of the steam. In fact, calculations show that in a steam turbine system, 70 to 80% of the total quantity of heat collected by heat collectors is consumed as evaporation latent heat. This is the cause for the huge number of heat collectors and for the vast installation area needed to install the heat collectors.
In view of the above, the present inventors have made the following invention, as means for realizing effective utilization of solar thermal energy and achieving large reductions in the number of accumulators and the installation area therefor, which have been problems in the solar thermal power-generating systems according to the related art. Specifically, based on a finding that the steam turbine system needs a large quantity of energy (evaporation latent heat) for steam generation, the present inventors made various investigations from the viewpoint of a technology in which, unlike a system based on generation of steam by solar heat, high-pressure hot water not needing evaporation latent heat is only produced in heat collectors and the high-pressure hot water can be utilized effectively. As a result of their investigations, the present inventors have reached a conclusion that the just-mentioned system wherein high-pressure hot water, which is lower in temperature than the steam in the conventional solar thermal power-generating systems and is in a liquid phase, can even be utilized effectively is applicable to gas turbine systems.

To be more specific, in the configuration reached by the present inventors, high-temperature hot water produced by solar heat is applied as atomization water of an atomizer for cooling intake air for a gas turbine, and solar energy collected on a thermal basis as the high-pressure hot water is utilized for making finer the liquid droplets at the atomizer. Particularly, making the spray liquid droplets finer is provided, in principle, by reduced-pressure boiling of the high-pressure hot water.

By adoption of the above-mentioned system, according to the present invention, a solar heat utilizing system is provided in which it suffices to collect solar heat by a quantity corresponding to the sensible heat (the quantity of heat for causing a temperature change without causing a phase change) for producing the high-pressure hot water, whereby it is enabled to eliminate the need for a large quantity of energy as evaporation latent heat, which has been indispensable in the systems according to the related art. As a result, it is possible to greatly reduce the number of heat collectors, which have been installed for collection of a large quantity of energy, and the installation area for the heat collectors.

Now, the solar assisted gas turbine system to which solar thermal energy is applied in the present invention will be described below.

Basic components of the gas turbine system are a compressor for compressing air, a combustor for putting the air compressed by the compressor and a fuel into combustion, and a turbine driven by a combustion gas produced in the combustor. Usually, an apparatus to be driven is connected to the gas turbine as a load apparatus. Particularly, in the case of a gas turbine power-generating system, a generator driven by the rotation of the gas turbine is added to the above-mentioned components. While a gas turbine power-generating system will be described below as a typical example of the solar assisted power-generating system, the solar assisted power-generating system is also applicable to a gas turbine system for driving other apparatus to be driven (pump, compressor, etc.) than a generator.

First, a basic concept common for modes for carrying out the present invention which are to be detailed later will be described.

In a compressor for compressing air, high-pressure hot water is mixed by spraying into air at a compressor inlet, in order to lower the air temperature to or below the atmospheric temperature in the inside of an air intake duct for taking in air or on the upstream side of the air intake duct. Here, the high-pressure hot water is produced by heating water in a heat collection tube of a heat collector by solar heat, and is supplied to an upstream portion of the compressor. In general, it is known that even spraying of room temperature water can lower the compressor inlet air temperature. It is preferable, however, to prevent formation of water droplets and to swiftly vaporize atomization water inside the compressor, which is a rotary machine, from the viewpoint of intake performance and apparatus reliability (rotary machine balance). From this point of view, the present example is characterized by spraying of hot water, which might seem contrary to the purpose of lowering the compressor inlet air temperature. Specifically, by utilizing the fact that about 70 to 80% of the potential heat content of the high-pressure hot water is latent heat of vaporization, a rapid pressure reduction from a high-pressure state (inside the heat collection tube and inside atomizing nozzles) to an atmospheric-pressure state (in the compressor inlet portion) is brought about, thereby causing reduced-pressure boiling of the hot water. In this case, if room temperature water is used, an endothermic action due to the latent heat of vaporization would lower the water temperature to below the freezing point, so that the water is liable to freeze at the compressor inlet portion. This results in a condition where the droplet diameter after atomization would hardly be fine and swift vaporization inside the compressor could hardly be expected. According to the present invention, therefore, as in this Example, high-pressure hot water is atomized so that making the droplets finer will be promoted at the time of reduced-pressure boiling. In this Example, solar heat is utilized for production of high-pressure hot water. Consequently, there is obtained an effect to avoid the use of any new fossil fuel and make it possible to restrain an increase in $CO_2$, which is one of the causes of global warming.

Now, modes for carrying out the present invention will be described in detail below, referring to the drawings.

EXAMPLE 1

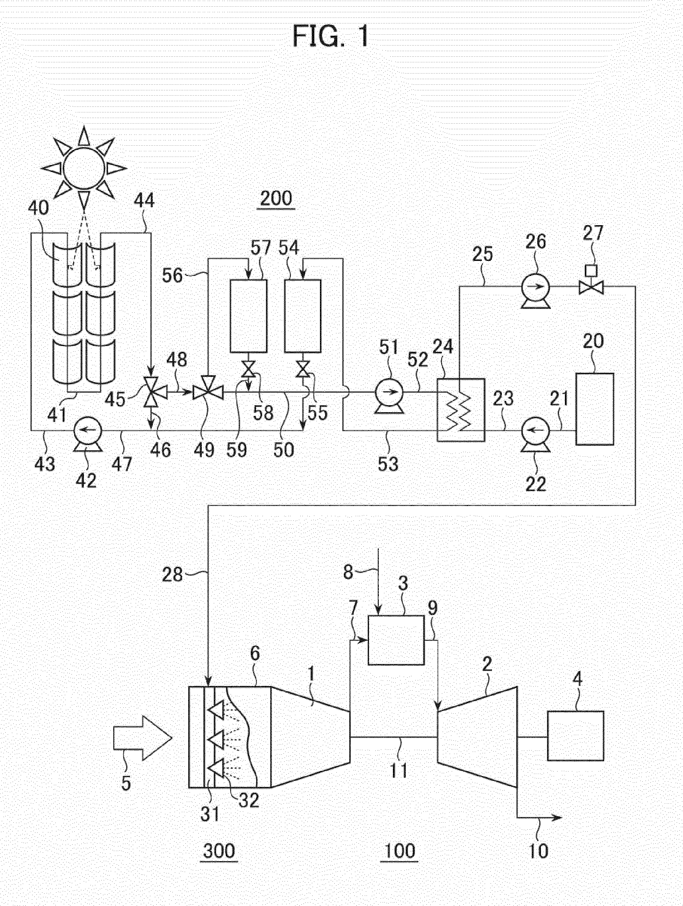

Example 1 of the present invention will be described referring to FIG. 1. FIG. 1 is a block diagram of a solar assisted gas turbine system in which a gas turbine power-generating system is provided with a hot water atomizer that utilizes solar heat.

In FIG. 1, a solar assisted gas turbine power-generating system in this Example generally includes a gas turbine apparatus 100, a heat collector 200 for collecting solar heat and raising the temperature of an oil used as a heating medium, and an atomizer 300 for producing high-pressure hot water by use of the oil raised in temperature by the heat collector 200, and spraying the high-pressure hot water into intake air.

The gas turbine apparatus 100 has an air intake duct 6 on the upstream side of a compressor 1. An air intake chamber (not shown) for taking in air may in some cases be provided on the upstream side of the air intake duct 6. Air 5 in atmospheric conditions is led through the air intake duct 6 to the compressor 1. Compressed air 7 formed by compression in the compressor 1 flows into a combustor 3. In the combustor 3, the compressed air 7 and a fuel 8 are put into combustion, generating a combustion gas 9 at a high temperature. The combustion gas 9 flows to a turbine 2, to rotate a generator 4 through the turbine 2 and a shaft 11. By this driving, electric power is generated. The combustion gas 9 having driven the turbine 2 is exhausted from the turbine 2 as a combustion exhaust gas 10.

The heat collector 200 mainly includes sunlight-collection plates 40 for collecting sunlight, and a heat collection tube 41 for heating a heating medium by the sunlight of which the light and heat have been collected by the sunlight-collection plates 40 (the heat collector 200 in its narrow sense is an assembly of the sunlight-collection plates 40 and the heat collection tube 41, but a total structure inclusive of lines and apparatuses connected to the assembly will hereinafter be referred to as the heat collector, if appropriate). An oil pump 42 for supplying the oil as the heating medium is connected to the upstream of the heat collection tube 41 via a piping 43. The oil heated in the heat collection tube 41 passes through a piping 44 and returns to the oil pump 42 by way of a three-way valve 45, a piping 46 and a piping 47. Furthermore, an outlet on the other side of the three-way valve 45 is connected to a next three-way valve 49 via a piping 48. One side of the three-way valve 49 is connected to a high temperature oil storage tank 57 by way of a piping 56. In addition, the other side of the three-way valve 49 is provided with a high temperature heat storage oil pump 51 by way of a piping 50. To this piping 50, a piping 59 is connected from a bottom portion of the high temperature oil storage tank 57 via a valve 58. An outlet piping 52 of the high temperature heat storage oil pump 51 is led to an oil/water heat-exchanger 24, and is connected to a low temperature oil storage tank 54 by a piping 53. Furthermore, the pipeline is connected from a bottom portion of the low temperature oil storage tank 54 to the piping 47 via a valve 55. On the other hand, water in a water tank 20 is caused by a water pump 22 to pass through a piping 21, to be fed through a piping 23 to the oil/water heat-exchanger 24. The water heated in the oil/water heat-exchanger 24 passes through an outlet piping 25 of the oil/water heat-exchanger 24, and is connected through a piping 28 to an atomizer main tube 31 of the atomizer 300, which will be described later.

The atomizer 300 includes the atomizer main tube 31 disposed inside the air intake duct 6 located on the upstream side of the compressor 1, and a plurality of atomizing nozzles 32 connected to the atomizer main tube 31. The atomizer main tube 31 is connected with the above-mentioned water supply pipe 30, and is supplied with high-pressure hot water from the heat collector 200. It is to be noted that while an example wherein the atomizing nozzles 32 of the atomizer 300 are disposed inside the air intake duct 6 has been illustrated in FIG. 1, the atomizing nozzles 32 may be installed in an air intake chamber that is not illustrated. In the case where a silencer is disposed inside the air intake chamber, the atomizing nozzles 32 are desirably located on the downstream side of the silencer. Besides, in the case where a screen or the like is disposed, it is desirable to install the atomizing nozzles 32 on the downstream side of the screen, from the viewpoint of deposition of atomization liquid droplets on the screen.

In the configuration in this Example as above-described, the heat collection tube 41 is irradiated with the sunlight collected by the sunlight-collection plates 40, and the oil supplied in the heat collection tube 41 is heated by the irradiation with the sunlight. With this oil as a heating medium, water is heated in the oil/water heat-exchanger 24. The water heated in the oil/water heat-exchanger 24 is fed under pressure into the piping 28 as high-pressure hot water by a booster pump 26. The downstream of the piping 28 is connected to the atomizer main tube 31 installed inside the air intake duct 6, and, further, the atomizer main tube 31 is provided with the plurality of atomizing nozzles 32. The high-pressure hot water passed into and through the piping 28 is sprayed into the inside of the air intake duct 6 from the atomizing nozzles 32 after passage through the atomizer main tube 31 (The air intake duct 6 in FIG. 1 is partially shown in section, for representing the status of the atomizing nozzles 32.).

<Operation, Working, Effect>

Now, operation of the Example shown in FIG. 1 will be described below.

In this Example, the oil as the heating medium is supplied into the inside of the heat collection tube 41 by the oil pump 42. The heat of the oil is transferred to the water fed by the water pump 22 through the oil/water heat-exchanger 24, to raise the water temperature to a proper temperature. Thereafter, the water pressure is raised by the booster pump 26 to a pressure suitable for atomization, and the quantity of water is controlled by a flow-regulating valve 27. By this, the water pressure, the water temperature and the quantity of water are kept in proper ranges suited to atomization, and the water is sent to the atomizer main tube 31 inside the air intake duct 6 under this condition. An effect of reduced-pressure boiling of the high-pressure hot water sprayed from the atomizing nozzles 32 inside the air intake duct 6 cools the air 5, whereby intake air flow rate of in the compressor 1 is increased, and the output of the gas turbine 2 is increased. It is to be noted that the oil heated in excess in the heat collection process of the oil is stored in the high temperature oil storage tank 57, to be used in a supplementary manner in a time zone in which heat collection is insufficient, such as when it is cloudy. It is also to be noted that the three-way valve 45 is opened and closed according to the oil temperature inside the piping 44. Specifically, in the case where the oil temperature in the piping 44 is at or below a predetermined temperature, the three-way valve 45 is so operated that the side of the piping 48 connected to the oil/water heat-exchanger 24 side is closed, and only the piping 46 serving as a return line to the heat collection tube 41 is opened, whereby the oil in the heat collection tube 41 is circulated until the oil temperature in the piping 44 is raised. Thereafter, when the oil temperature inside the piping 44 is raised to or above a predetermined temperature, the three-way valve 45 is so operated that the piping 48 side is opened, and the piping 46 side is closed. Furthermore, normally, the three-way valve 49 is in such a state that both the piping 50 connected to the oil/water heat-exchanger 24 side and the piping 56 connected to the high temperature oil storage tank 57 side are open. This ensures that a quantity of oil necessary for the oil/water heat-exchanger 24 is fed through the piping 52 by the high temperature heat storage oil pump 51. A surplus portion of the oil raised in temperature at the three-way valve 49 is passed through the piping 56, to be stored in the high temperature oil storage tank 57. Both the valve 58 located at the bottom portion of the high temperature oil storage tank 57 and the valve 55 located at the bottom portion of the low temperature oil storage tank 54 are normally in an open state, so that the oil flows downstream, as necessary. The oil lowered in temperature through heat exchange in the oil/water heat-exchanger 24 flows through the piping 53 into the low temperature oil storage tank 54, from which it is supplied again into the heat collection tube 41 by the oil pump 42, to be raised in temperature.

In this Example, description will be made in relation to an exemplary operation which is carried out at a water pressure of 5 MPa and a water temperature of 150°C.

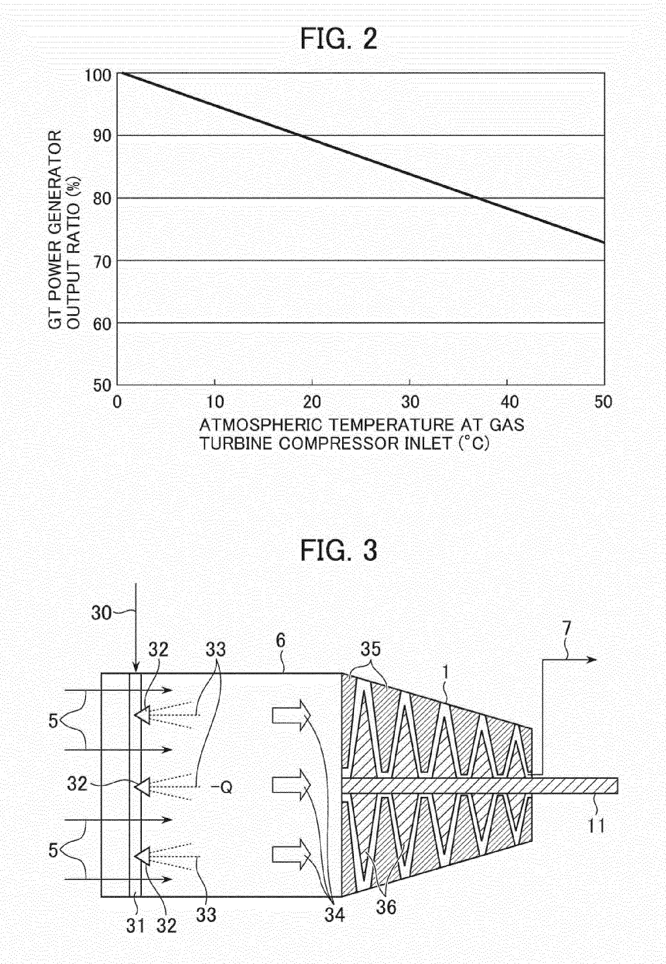

FIG. 2 is a diagram showing the relationship between atmospheric temperature and power generator output in a conventional type gas turbine system, taken as a comparative example. For instance, considering with a gas turbine compressor inlet atmospheric temperature of 15°C as a reference, the gas turbine power generator output ratio at the time of 35°C (taken as an example of a condition in summer) is lowered by about 10%. If the compressor inlet temperature remains in the atmospheric conditions in this way, air density is lowered in the cases of a high atmospheric temperature, such as in summer; in such cases, the turbine output is lowered and the power generator output which can be taken out to the exterior is reduced, according to the reduction in intake air flow rate.

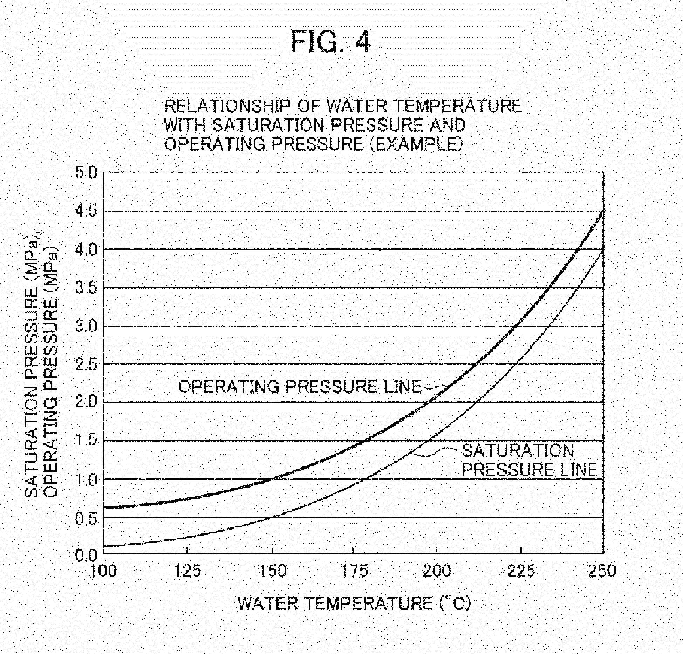

In view of the above, means for lowering the air temperature at the compressor inlet may be contemplated, in order to restrain the aforementioned lowering in power generator output due to the rise in the atmospheric temperature. In this regard, this Example is characterized in that the evaporation latent heat, namely, the heat deprived of by hot water when the hot water is vaporized, is utilized as the air temperature lowering means, and that solar thermal energy is utilized for making spray liquid droplets finer. Specifically, as illustrated in a sectional view of a compressor inlet portion of a solar assisted gas turbine system shown in FIG. 3, the high-pressure hot water produced using the heat of the oil heated in the heat collection tube 41 is led to the atomizer main tube 31 of the atomizer 300 provided inside the intake duct 6, and is sprayed inside the intake duct 6 from the plurality of atomizing nozzles 32 with which the atomizing main tube 31 is equipped. For instance, the spraying flow rate of the high-pressure hot water is 1% (weight flow rate) based on the flow rate of the compressor inlet air 5. In this instance, the high-pressure hot water at 5 MPa and 150°C on the upstream of the atomizing nozzles 32 is reduced in pressure to below the atmospheric pressure immediately upon spraying from the atomizing nozzles 32. Therefore, the high-pressure hot water undergoes reduced-pressure boiling in the flow of the air 5 having been introduced into the intake duct 6, and liquid droplets 33 are partly vaporized, thereby absorbing heat (-Q) from the surrounding fluid. Then, a fluid mixture 34 of the air 5 at 35°C, the air 5 of which the temperature has been lowered (-15°C) due to partial vaporization of the droplets of the hot water vaporized, and unvaporized droplets 33 is led into the compressor 1. In addition, the residual droplets having not been vaporized before led into the compressor are completely vaporized while flowing downstream within the compressor 1. The fluid mixture 34 flows between a stator blade 35 and a rotor blade 36 of the compressor 1, to be led to the combustor 3 as the compressed air 7. It is to be noted that, as shown in FIG. 4, the pressure upstream of the atomizing nozzles 32 is set, for example, to a pressure at or above an operating pressure line so as to be not lower than a saturation pressure in relation to water temperature, whereby a high-pressure hot water state is maintained. It is also to be noted that the heat collector 200 can be described as a heat collector wherein the water raised in pressure is heated to a temperature higher than the boiling point at the atmospheric pressure and lower than the boiling point at the raised pressure, whereby high-pressure hot water for atomization is produced.

In addition, the quantity of heat needed for obtaining this high-pressure hot water corresponds to the sensible heat, so that the area of the sunlight-collection plates 40 required is only a fraction of that in the case of obtaining the steam which needs a quantity of heat inclusive of the evaporation latent heat.

By the atomizer 300 in this Example, the output of the gas turbine can be increased. The reason can be described as follows, in view of an output-increasing mechanism of the spraying into intake air.

(1) An effect of increasing the turbine output through an increase in the weight flow rate of air flowing into the compressor, which in turn is caused by an increase in the density of intake air due to cooling thereof until it flows into the compressor.

(2) An effect of reducing the compression work in the compressor, due to depriving the surrounding gas of evaporation latent heat by liquid droplets at the time of evaporation of the liquid droplets in the compressor, and to suppression of a rise in the temperature of air which is compressed and raised in temperature.

(3) An effect of increasing the turbine output through an increase in the flow rate on the turbine side according to the quantity of liquid droplets evaporated.

(4) An effect of increasing the work capable of being taken out at the time of expansion of a compressed gas mixture, through an increase in the specific heat of the gas mixture due to mixing-in of steam which is higher than air in specific heat.

<Principle of suppression of lowering in output by atomization cooling of intake air>

Now, the principle of suppression of a lowering in output by spraying of fine liquid droplets will be described in detail below.

The atomizer used in this Example is characterized in that liquid droplets are sprayed into the gas supplied to the compressor, and the temperature of the gas led into the compressor is lowered to below the outside air temperature, resulting in that the liquid droplets sprayed and led into the compressor together with the gas are vaporized while flowing downstream inside the compressor. Consequently, it is possible, by use of a simple equipment suited to practical use, to spray liquid droplets into the intake air led into the compressor inlet and thereby to realize both an enhanced output and an enhanced thermal efficiency.

This makes it possible, using a simple equipment suited to practical use, to supply fine liquid droplets into the intake air supplied to the compressor, and to allow the water droplets to be favorably entrained in the flow of the intake air supplied to the compressor. Therefore, the gas containing the liquid droplets can be efficiently fed into the compressor via the compressor inlet. This makes it possible to enhance the turbine output and thermal efficiency.

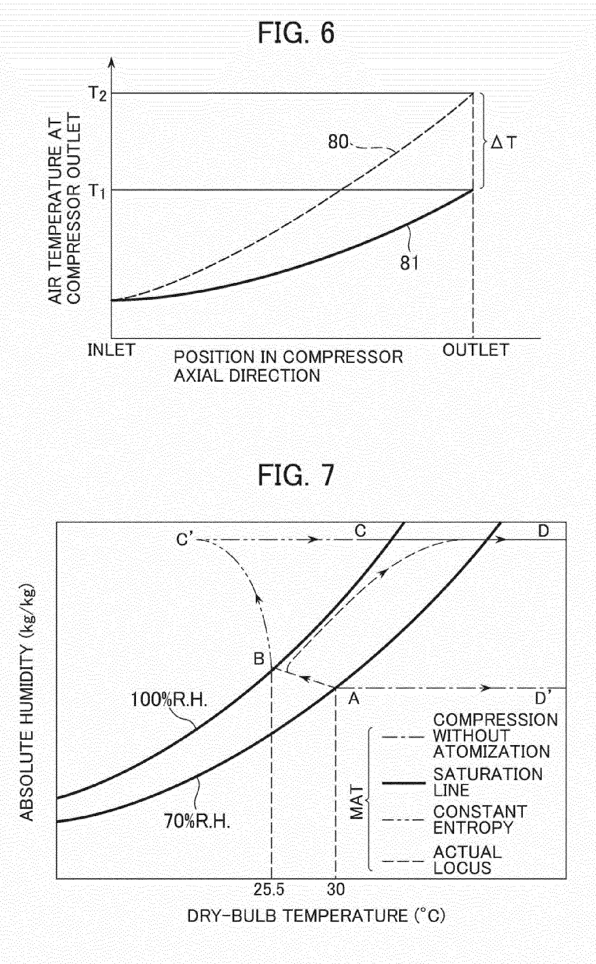

FIG. 6 shows temperature distribution of compressed air in the compressor. The air temperature T at the outlet of the compressor 1 is lower in the case 81 where water is atomized and water droplets are vaporized in the compressor 1 than in the case 80 where water droplets are not mixed in. The air temperature T is continuously lowered also within the compressor.

The output-increasing mechanism according to this Example can, on a qualitative basis, be summarized as follows.

The mechanism includes: (1) cooling of intake air on lines of constant wet-bulb temperature, inside an air intake chamber introduced into the compressor 1; (2) cooling of inside gas by vaporization of the liquid droplets introduced into the compressor 1; (3) the difference between the quantity of the working fluid passing through the turbine 2 and the quantity of the working fluid passing through the compressor 1, which corresponds to the quantity of vaporization inside the compressor 1; (4) an increase in the specific heat at constant pressure of the gas mixture due to mixing-in of steam which has a high specific heat at constant pressure; and the like.

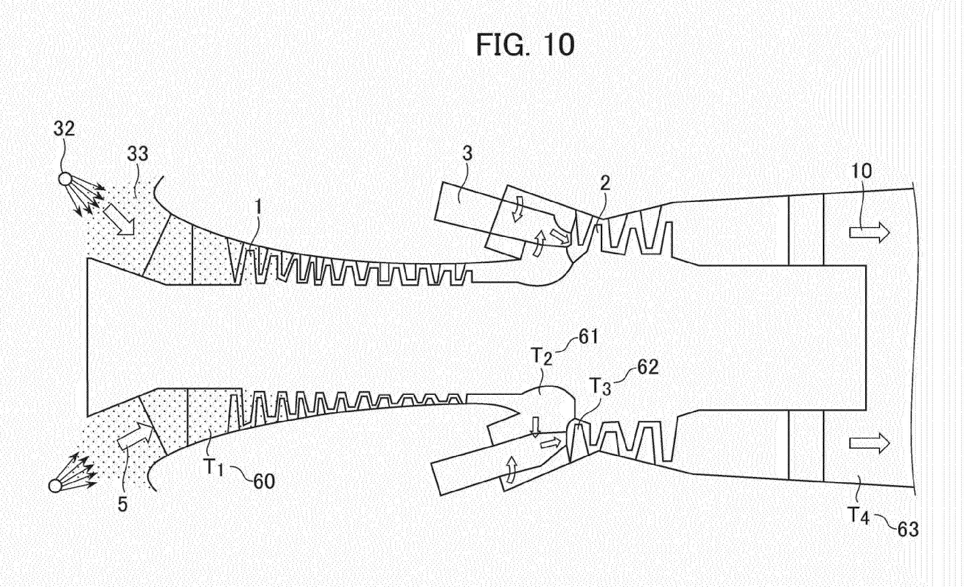

FIG. 10 shows a detail structural view of a gas turbine provided with the present invention. The spray liquid droplets jetted into the intake air by the atomizing nozzles 32 flow in via the compressor inlet in the state of being entrained in the airflow. The average air flow rate of the intake air flowing within the air intake chamber is, for example, 10 m/s. The liquid droplets 33 move along streamlines between the blades of the compressor 1. The intake air is heated by adiabatic compression inside the compressor, and the liquid droplets are transported toward the side of rear-stage blades while decreasing in particle diameter because of being vaporized from their surfaces by the heat of the intake air. In this process, the latent heat of vaporization necessary for vaporization is supplied from the air inside the compressor, so that the temperature of the air inside the compressor is lowered, as compared with the case where the present invention is not applied (see FIG. 6). If the liquid droplets are large in particle diameter, they would collide against the blades or a casing of the compressor 1, to get heat from metal, thereby being vaporized. As a result, the temperature-lowering effect of the working fluid may be spoiled. From such a point of view, therefore, it is preferable for the liquid droplets to be smaller in particle diameter.

The spray liquid droplets have a particle diameter distribution. From the viewpoint of restraining collision of the liquid droplets against the blades or casing of the compressor 1 and preventing erosion of the blades, the liquid droplets sprayed are so controlled to have a main particle diameter of not more than 50 $\mu$m. From the viewpoint of reducing more the effect of the liquid droplets on the blades, it is preferable to control the particle diameter to be not more than 50 $\mu$m in terms of maximum particle diameter.

Furthermore, a smaller particle diameter ensures that the liquid droplets can be distributed in the inflow of air more uniformly and that a temperature distribution is generated inside the compressor. From this point of view, the particle diameter is preferably controlled to be not more than 30 $\mu$m in terms of Sauter's mean diameter (SMD). Since the liquid droplets sprayed from the atomizing nozzles have a particle size distribution, measurement of the particle diameter in terms of the maximum particle diameter is not easy to carry out. In practice, therefore, the particle diameter measured in terms of the above-mentioned Sauter's mean diameter (SMD) is applicable. It is to be noted that although a smaller particle diameter is more preferable, atomizing nozzles for forming liquid droplets with a small particle diameter need a highly accurate fabrication technique; therefore, the range down to the lower limit of nozzle size technically obtainable becomes a practical range for the particle diameter. From such a point of view, therefore, for example the above-mentioned main particle diameter, maximum particle diameter or mean diameter has a lower limit of 1 $\mu$m on a measurement accuracy basis. In addition, liquid droplets finer in particle diameter often require more energy for production thereof, and, therefore, the above-mentioned lower limit may be determined taking into account the energy to be used for production of the liquid droplets. When the liquid droplets are so sized as to be suspended in air without easily falling, the contact surfaces are generally in a good state.

Vaporization of the liquid droplets increases the weight flow rate of the working fluid. When the vaporization inside the compressor is completed, the gas in the compressor 1 further undergoes adiabatic compression. In this instance, the specific heat at constant pressure of steam is about two times that of air, at temperatures around the typical temperature (300°C) inside the compressor. On a heat capacity basis (as air), therefore, the vaporization of the water droplets has an effect equivalent to that of an increase in the quantity of air, as working fluid, by about two times the weight of the water droplets vaporized. In other words, the vaporization of the liquid droplets has an effect on lowering of the compressor outlet air temperature T2' (a temperature rise-suppressing effect). In this way, the vaporization of the water droplets in the compressor has an effect of lowering the compressor outlet air temperature. The power of the compressor is equal to the difference in enthalpy of air between the compressor inlet and the compressor outlet, and the enthalpy of air is proportional to temperature. Therefore, when the air temperature at the compressor outlet is lowered, the power required for the compressor can be reduced.

The working fluid (air) compressed by the compressor is raised in temperature by combustion of fuel in the combustor, before flowing into the turbine to perform an expansion work. The work, called turbine shaft output, is equal to the difference in enthalpy of air between the turbine inlet and the turbine outlet. The input of fuel is so controlled that the turbine inlet gas temperature will not exceed a predetermined temperature. For instance, the turbine inlet temperature is calculated from actual measurements of turbine outlet exhaust gas temperature and compressor outlet pressure Pcd, and the flow rate of the fuel to the combustor 3 is so controlled that the calculated value will be equal to the value before application of this Example. When such a constant combustion temperature control is performed, the input of the fuel is increased by an amount corresponding to the lowering in the compressor outlet gas temperature T2', as mentioned above. Besides, when the combustion temperature is unchanged and the weight proportion of water spray is about several percent based on the intake air, the turbine inlet pressure and the compressor outlet pressure are approximately unchanged before and after the spraying, so that the turbine outlet gas temperature T4 is also unchanged. Accordingly, the turbine shaft output remains unchanged before and after the spraying. On the other hand, the net output of the gas turbine is obtained by subtracting the power of the compressor from the turbine shaft output. In short, therefore, the net output of the gas turbine can be increased by an amount corresponding to the reduction in the power of the compressor by application of the present invention.

The electric output QE of the turbine 2 is obtained by subtracting the work Cp(T2 - T1) of the compressor 1 from the shaft output Cp(T3 - T4) of the turbine 2, and is approximately represented by the following mathematical expression.

[Mathematical 1]

$$QE/Cp = T3 - T4 - (T2 - T1) \qquad \cdots \text{(Mathematical 1)}$$

Normally, an operation is so conducted that the combustion temperature T3 will be constant. Therefore, the gas turbine outlet temperature T4 is unchanged, and the turbine shaft output Cp(T3-T4) is also constant. In this instance, when the compressor outlet temperature T2 is lowered to T2' (<T2) due to mixing-in of the water spray, an incremental output T2 - T2' equivalent to the lowering in compressor work is obtained. On the other hand, the efficiency $\eta$ of the gas turbine is approximately given by the following mathematical expression.

[Mathematical 2]

$$\eta = 1 - \frac{T4 - T1}{T3 - T2} \qquad \cdots \text{(Mathematical 2)}$$

In this case, since T2'<T2, the second term on the right-hand side becomes smaller. Thus, it is seen that the efficiency is also enhanced by the water spray. In other words, the thermal energy Cp(T4 - T1) (the numerator of the second term in Mathematical 2) discarded from the gas turbine (which is a heat engine) to the outside of the system is little changed before and after the application of this Example. In contrast, the fuel energy Cp(T3 - T2') inputted is increased by about Cp(T2 - T2'), or by an amount roughly corresponding to the lowering in the compressor work when this Example is applied. On the other hand, the lowering in the compressor work is equal to the incremental output. Therefore, the increase of the fuel is substantially entirely contributing to the increase in gas turbine output. In other words, the operation corresponding to the incremental output is performed at a thermal efficiency of 100%. Thus, in this Example, in order to reduce the work of the compressor which is not clearly shown in the related art involving cooling of intake air, the water spray is mixed into the intake air introduced to the compressor 1, whereby the total gas turbine output can be enhanced. On the other hand, the related art involving injection of water into the inlet of the combustor 3 aims at increasing the output by increasing the working fluid. This approach, however, does not reduce the work of the compressor 1, so that the efficiency is lowered, adversely.

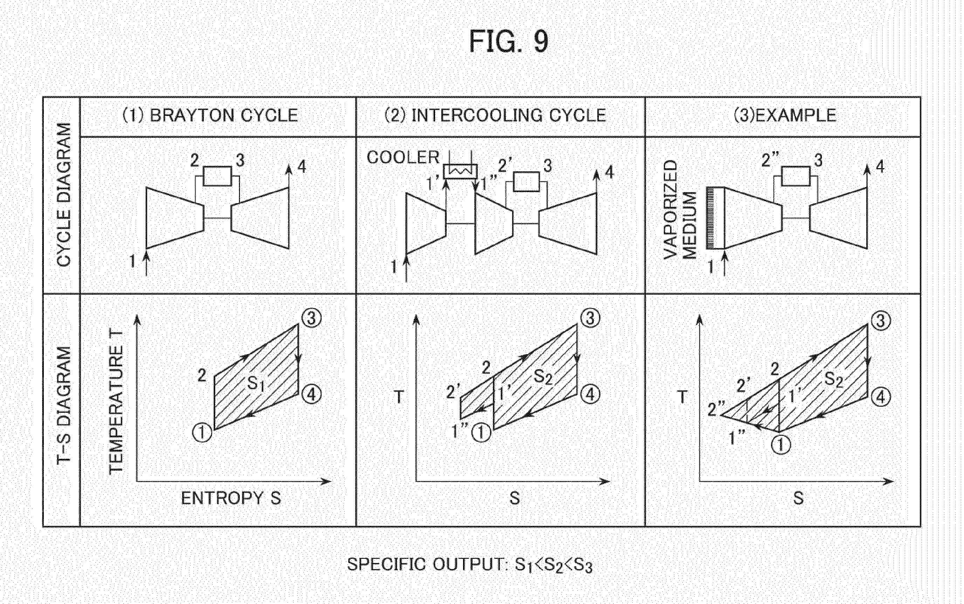

FIG. 9 shows comparisons of the heat cycle in this Example with other heat cycles. The area of the closed region in each cycle diagram represents the gas turbine output per unit intake flow rate, that is, specific power. The numbers in the figures denote the working fluids in the corresponding sites in the cycle diagrams. In FIG. 9, symbol 1 denotes the compressor inlet, symbol 1' denotes the inlet to an intercooler downstream of a first-stage compressor, symbol 1" denotes an inlet to a second-stage compressor downstream of the intercooler, symbol 2 denotes a combustor inlet in a Brayton cycle, symbol 2' denotes an inlet to the combustor downstream of the second-stage compressor, symbol 3 denotes an inlet to the turbine downstream of the combustor, and symbol 4 denotes the turbine outlet.

The temperature T-entropy S diagrams in the bottom column of FIG. 9 show comparisons of characteristics of the cycles in the case where the values of temperature T and entropy S in positions 1, 3 and 4 are fixed.

As is clear from the diagrams, the magnitude of the specific power is in the order (decreasing order) of the cycle in which the aforementioned fine water droplets are sprayed in the air intake chamber of the compressor to introduce water droplets via the compressor inlet as in this Example, an intercooling cycle as disclosed in Japanese Patent Laid-open No. Hei 6-10702, and an ordinary Brayton cycle. Particularly, the difference of the cycle in the present invention from the intercooling cycle is derived from the fact that in the present invention, the water droplets introduced into the compressor is continuously vaporized starting from the compressor inlet portion, which is expressed in the shape of the cycle.

While the intercooling cycle is inferior in thermal efficiency to the Brayton cycle, the cycle in this Example is superior to the Brayton cycle as shown above. Therefore, the cycle in the present invention is higher in thermal efficiency than the intercooling cycle.

In general, as the position of vaporization of spray liquid droplets inside the compressor 1 is closer to the inlet of the compressor 1, the air temperature at the outlet of the compressor 1 is lowered more, which is advantageous from the viewpoint of increase in output and enhancement of efficiency. In the method of mixing a spray into the air 5 serving as intake air, a greater effect is obtained as the particle diameter of the spray is finer, since a spray with a finer particle diameter is vaporized faster after flowing into the compressor 1. In addition, the finer particle diameter ensures that the spray liquid droplets are suspended in air, and is smoothly introduced into the compressor in company with the intake air.

Therefore, the liquid droplets spouting from the atomizing nozzles 32 are preferably so sized as to be substantially wholly vaporized by the time they reach the outlet of the compressor 1. The proportion of the liquid droplets vaporized in this case is lower than 100% on a realistic basis, but the proportion may be in the range up to an upper limit attainable by the aforementioned configuration. Practically, it suffices that not less than 90% of the liquid droplets have been vaporized when reaching the compressor outlet.

For instance, calculation of the proportion of vaporization by taking into account the correlation between the absolute humidity at the outlet of the compressor assumed from the outside air conditions and the value of absolute humidity measured at the position of EGV (Exit Guide Vane), under the condition where the pressure Pcd at the outlet of the compressor 1 is 0.84 MPa, showed that not less than 95% of the liquid droplets have been vaporized when reaching the compressor outlet.

The period of time required for air to pass through the compressor is short. From the viewpoint of allowing the liquid droplets to be favorably vaporized during this period of time and enhancing vaporization efficiency, the particle diameter of the liquid droplets in terms of Sauter's mean diameter (SMD) is desirably not more than 30 $\mu$m.

It is to be noted that the atomizing nozzles for forming liquid droplets with a small particle diameter need a highly accurate fabrication technique; therefore, the range down to the lower limit of nozzle size technically obtainable gives a lower limit for the particle diameter. For example, the lower limit is 1 $\mu$m, from the viewpoint of measurement accuracy.

This is because favorable vaporization of liquid droplets in the compressor is difficult to achieve when the droplets are too large.

The quantity of liquid droplets introduced can be controlled according to temperature, humidity or the extent of the increase in output. Taking into account the quantity of the sprayed liquid droplets which would be vaporized during passing from the spraying site to the compressor inlet, the liquid droplets can be introduced in an amount of 0.2 wt% based on the weight flow rate of intake air. An upper limit for this quantity is determined from the viewpoint of ensuring that a favorable function of the compressor can be maintained. For instance, the upper limit can be set at 5 wt%, and the liquid droplets can be introduced in a quantity ranging up to this value.

While the quantity of liquid droplets to be introduced, in ratio to the intake air weight flow rate, can be regulated taking into account summer season or drying conditions and the like, the quantity can be set in the range from 0.8 wt% to 5 wt% for realizing a greater increase in output or the like.

In this Example, it suffices to spray a small quantity of liquid droplets, as compared with the liquid droplet spraying means according to the related art of the type: liquid droplets (for example, 100 to 150 μm or the like) are simply sprayed into the air introduced to the compressor inlet so as to lower the air temperature, while the water is recovered after the spraying and is again utilized for spraying.

The consumption of atomization water is maximized in the case where the output lowered at a high temperature in summer is recovered to a rated value. The consumption of compressed air in the case of supplying air at the time of spraying cannot be neglected as power consumption; as a yardstick, the consumption of compressed air is desirably not more than the consumption of water. Accordingly, supply of no air for forming liquid droplets with the aforementioned particle diameter is rather economical, provided that particle diameter conditions are satisfied.

According to this Example, it is possible to provide a power-generating plant in which variations in output can be restrained throughout the year, by controlling the spray flow rate according to the outside air temperature. For instance, the opening of a regulating valve (not shown) is so controlled that the spray flow rate is greater (increased) when the temperature of the air introduced to the compressor is higher than when the air temperature is lower.

In addition, it is preferable to operate the system so as to supply the liquid droplets at the time of an operation at a constant combustion temperature. This makes it possible to enhance efficiency and to enhance output.

Besides, in gas turbines not aiming at power generation or in gas turbines of the type for obtaining a torque by driving of the gas turbine, turbine shaft output can be lowered by lowering the combustion temperature. Especially, fuel can be saved by adapting this Example at the time of a partially loaded operation.

In this Example, control of output according to a load demand can be performed even in a range above an output restricted by the outside air temperature.

In addition, the output can be enhanced without raising the combustion temperature, and, therefore, a gas turbine with a prolonged life can be provided.

According to this Example, besides, the gas inside the compressor can be cooled. Therefore, where this is utilized so as to use compressor bleed air for cooling the blades of the gas turbine, the quantity of bleed air for cooling can be reduced. In addition, this makes it possible to increase the quantity of the working fluid in the gas turbine, and, accordingly, an enhanced efficiency and an increased output can be expected.

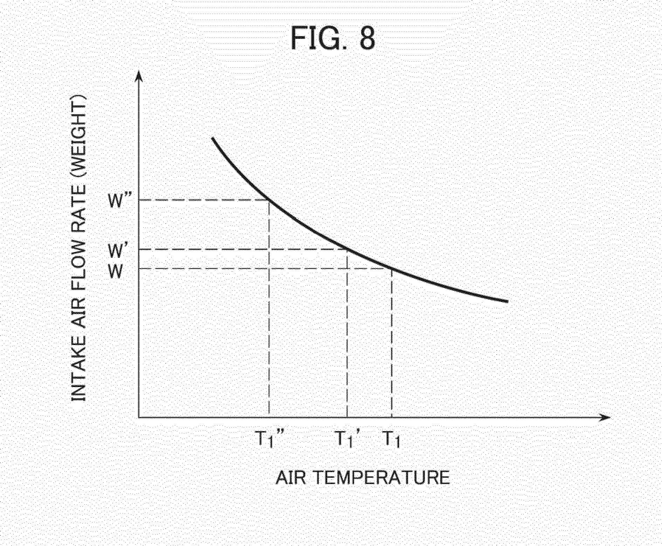

FIGS. 7 and 8 show changes in the state of the working fluid in the process in which the outside air is introduced to the compressor 1 and compressed, and the relationship between intake air temperature and intake air weight flow rate, respectively.

FIG. 7 shows changes in the state in the case where the outside air conditions are 30°C and 70% humidity (R.H.).

The outside air state is represented by point A. When the state of the outside air undergoes cooling through humidification along the lines of constant wet-bulb temperature, before the outside air flows into the compressor, to reach a saturated wet state, intake air at the inlet of the compressor 1 moves to state B. The humidity of the gas introduced into the compressor 1 by the spraying of the liquid droplets is preferably raised to or above about 90%, from the viewpoint of promoting the vaporization before introduction into the compressor. It is further preferable to set the humidity to or above 95%, from the viewpoint of contriving more cooling of the intake air. Those liquid droplets which have not been vaporized in the intake air duct 6 are continuously vaporized during a compression process from B to C. Assuming that a saturated state is maintained during a vaporization process, boiling is completed at state C, and a temperature rise in a monolayer compression process occurs in a process from C to D. Assuming that vaporization is a constant-entropy change, the boiling completion point lies in a supersaturated state of state C'. Actually, the rate of vaporization from liquid droplets is finite; therefore, the phase change is considered to be thermally non-equilibrium and to follow the broken-line locus, off a saturation line. On the other hand, in an ordinary compression process, the state changes along a locus from A to D'.

In FIG. 7, if the temperature at A is T1 and the temperature at B is T1', the increase in intake air flow rate due to the lowering in temperature from T1 to T1' is an increase from W to W', as schematically shown in FIG. 8. The residual liquid droplets are introduced into the compressor 1 to be vaporized there, thereby contributing to a reduction in the work of the compressor 1.

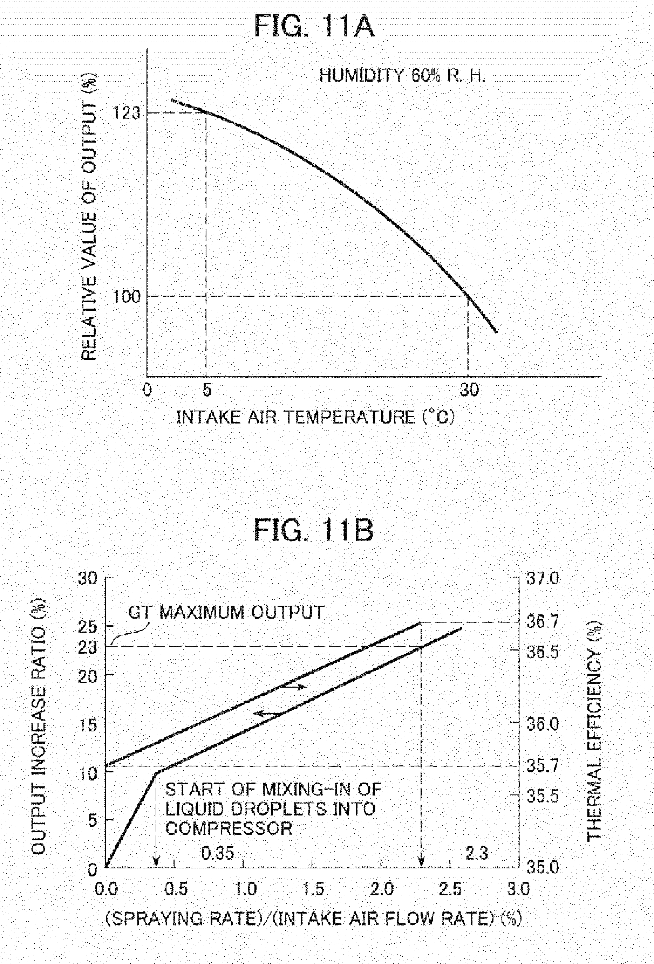

FIG. 11 shows the relationship between water droplet spraying rate and gas turbine output increase ratio. FIG. 11(a) shows variation in terms of relative value of output in relation to intake air temperature, and FIG. 11(b) shows the relationship between the spraying rate and the incremental output.

As for calculation conditions, for example, the values are those calculated under the conditions including outside air conditions of 35°C and 53% relative humidity, a compressor air flow characteristic of 417 kg/s, a compressor polytropic efficiency of 0.915, a turbine adiabatic efficiency of 0.89, a combustion temperature of 1290°C, a compressor bleed air quantity of 20%, a discharge pressure of 1.48 MPa, and a vaporization stage pressure of 0.25 MPa. It is seen that when room temperature water is atomized, 0.35% of the intake air flow rate is vaporized in the intake air chamber, before flowing into the compressor. This causes a lowering in intake air temperature and a rise in air density, resulting in a several percent increase in weight flow rate of intake air led into the compressor, which contributes to the incremental gas turbine output. The residual atomization water is sucked into the compressor as liquid droplets in company with the airflow, to be vaporized inside the compressor, which contributes to the reduction in the work of the compressor.

The heat efficiency improvement ratio at the time of 2.3% atomization is 2.8% in relative value. The water consumption necessary for recovering the gas turbine output to an output at the time of 5% base-loaded operation is about 2.3 wt% based on the intake air weight flow rate. An estimation has shown that the incremental output in an operation for recovering the gas turbine output to a maximum is made up of: an increment based on cooling before entrance into the compressor 1 of about 35%; an increment based on cooling by vaporization inside the compressor of about 37%; and an increment based on the difference between the quantity of working fluid passing through the turbine and the quantity of working fluid passing through the compressor and on an increase in specific heat at constant pressure due to incorporation of steam of about 28%.

Though not described in the scale in the drawing, it is also possible, by further increasing the quantity of atomization water, to obtain an incremental output of up to a permitted output level with a spray flow rate of about 5 wt%. As the spraying rate increases, the increase in output is influenced more rather by the water droplet vaporization action inside the compressor 1 than the action (cooling action) outside the compressor 1.

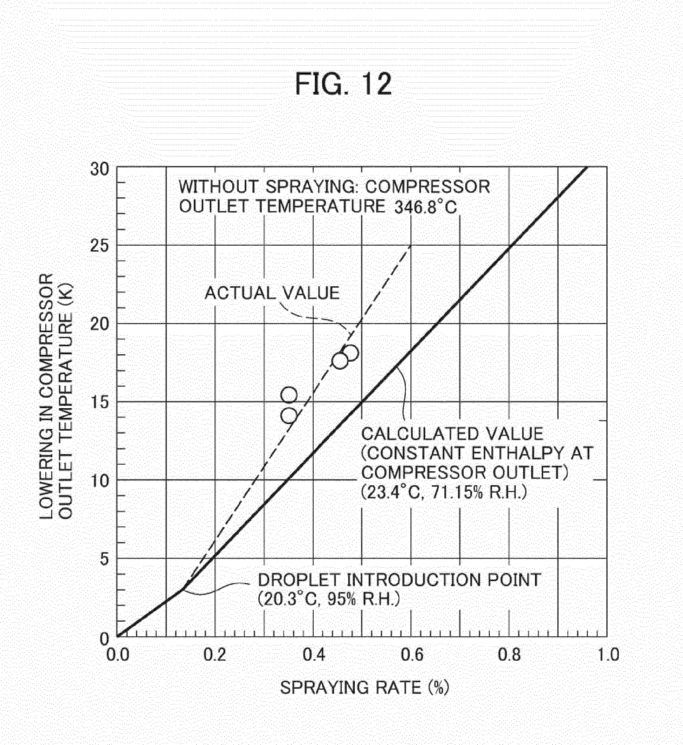

In addition, FIG. 12 shows the relationship of the differential compressor outlet temperature before and after atomization with spraying rate. It is seen that vaporization and cooling before introduction into the compressor 1 can be efficiently performed with a small flow rate. The humidity reached by the intake air flowing into the inlet of the compressor 1 was around 95%. The solid line represents the difference between a gas temperature at the outlet of the compressor 1 and a corresponding gas temperature before the atomization. The gas temperature at the outlet of the compressor 1 is calculated from the two conditions that the absolute humidity of gas at the outlet of the compressor 1 and the enthalpy of gas at the outlet of the compressor 1 both determined on the assumption that the liquid droplets having flowed into the compressor 1 are wholly vaporized are equal to the values before atomization. This line corresponds to the case where it is assumed that there is no reduction in power. However, the actual values represented by void circles (a broken line is drawn for easy understanding) are in excess of this line, which means a reduction in power exists. This is because the lowering in temperature by vaporization is amplified in the compression process at a stage following the vaporization point.

From this also, it is considered that in regard of the liquid droplets introduced into the compressor 1 via the atomizing nozzles 32, it is preferable to set the vaporization quantity on the former stage side to be greater than the vaporization quantity on the latter stage side, whereby the liquid droplets introduced into the compressor 1 are vaporized mainly on the former stage side, which is advantageous from the viewpoint of reduction in power.

The liquid droplets are sprayed in such an extent that the temperature of the compressed air discharged from the compressor 1 is thereby lowered from the value before atomization by not less than 5°C. From the viewpoint of realizing a further increase in output, such an extent as to lower the temperature by not less than 25°C is adopted. It is to be noted here that the upper limit for the extent can be determined from a practical point of view. For example, it is appropriate to adopt such an extent as to lower the temperature by not more than 50°C.

<Principle of making liquid droplets finer by reduced-pressure boiling>

Now, the principle of making sprayed liquid droplets finer by reduced-pressure boiling will be described below.

In the above, description has been made of an intake air atomizer by which fine liquid droplets are sprayed into the air before flowing into the compressor, the liquid droplets are partly evaporated by the time they reach the inlet of the compressor, and the residual liquid droplets are evaporated inside the compressor. According to this atomizer, it is ensured that when the liquid droplets are evaporated inside the compressor, they deprive the surrounding gas of the evaporation latent heat, which has an effect of suppressing the rise in the temperature of the air being compressed. Therefore, the intake air atomizer can be regarded as an apparatus which is similar in function to an intercooler in a HAT (Humid Air Turbine) cycle. It is to be noted, however, that in spraying the liquid droplets into the inlet of the compressor, the liquid droplets sprayed should be sufficiently fine in particle diameter so that the sprayed liquid droplets will not damage the compressor blades and the liquid droplets will be entirely evaporated inside the compressor.

In a gas turbine equipment in which liquid droplets are sprayed into the air (combustion-supporting gas) before flowing into the compressor, it is ensured as above-mentioned that when the liquid droplets are evaporated, they deprive the surrounding gas of the evaporation latent heat, which has an effect of suppressing the rise in the temperature of the air being compressed. Thus, the power required for compression is reduced, in an effective manner.

In the case of installing such an atomizer, it is desirable that the sprayed liquid droplets be finer in particle diameter, the power necessary for making the sprayed liquid droplets fine be lower, and the structure for atomization (spraying) be simpler. It is to be noted that examples of making liquid droplets finer include a method in which water is sprayed together with compressed air. However, this spraying method has a problem in that power for supplying the compressed air is needed additionally, whereby the reducing effect of spraying (atomization) on the power necessary for the compressor would be cut down.

In view of this, in this Example, the temperature of the atomization water supplied to the atomizer is set at or above the boiling point of water under the pressure (atmospheric pressure) of the air supplied to the compressor, then the high-pressure hot water is turned into fine particles by reduced-pressure boiling, and the resulting fine liquid droplets are sprayed into the intake air introduced to the compressor. Specifically, for example, a pressure reduction down to the atmospheric pressure is conducted by the atomizing nozzles, and bubbles are generated by reduced-pressure boiling in the nozzles, whereby the liquid droplets are made finer. Since the atomization water is only supplied to the atomizing nozzles, the structure is very simple, and no compressed air or the like is needed. Accordingly, the reducing effect on the power necessary for the compressor is high, and there is an effect such that an enhanced cycle efficiency can be achieved.

In the above-mentioned atomization system, making the sprayed liquid droplets finer is promoted, so that a reduction in the power necessary for obtaining the desired liquid droplet diameter can be attained. Specifically, the body area average particle diameter d of liquid droplets sprayed from single-hole nozzles with a diameter of $d_N$ is represented by the following mathematical expression 3 by use of jet velocity u, surface tension $\sigma$, gas density $\rho_G$, liquid viscosity coefficient $\eta$, and liquid density $\rho_L$.

[Mathematical 3]

$$d = 83.14 \frac{d_N}{u} \left( \frac{\sigma}{\rho_G} \right)^{0.25} \times \left( 1 + 3.31 \frac{\eta}{\sqrt{\rho_L \sigma d_N}} \right) \qquad \cdots \text{(Mathematical 3)}$$

From this mathematical expression it is seen that where the nozzle diameter $d_N$ is constant, the governing factors for the particle diameter of the liquid droplets sprayed are variations in the physical property values due to variations in the temperatures and pressures of the fluids, and the jet velocity u. As the temperature of the atomization water becomes higher, the surface tension $\sigma$ and the viscosity coefficient $\eta_L$ become lower, and the liquid droplet diameter obtained from the mathematical expression 3 becomes smaller, as a synthetic consequence of variations in the physical property values of the water. In addition, as a different is generated between the pressure before atomization and the pressure in the atomization environment, the jet velocity is enhanced, so that the liquid droplet diameter is reduced.

From the foregoing it is seen that making the sprayed liquid droplets finer is promoted by the use of water which is high in temperature and pressure. In addition, in the case where atomization is conducted under a condition where the atomization water temperature is higher than the boiling point of water in the ambient pressure after atomization, there occurs reduced-pressure boiling in which bubbles are generated inside the atomizing nozzles and in the jets immediately after ejection from the nozzles, whereby the liquid droplets are made more finer. With the liquid droplets made finer, evaporation of the liquid droplets into the air becomes faster, resulting in that the cooling effect offered by the evaporation of the liquid droplets can be obtained in a short time.

From the viewpoint of evaporation of liquid droplets, in general, the evaporation of the liquid droplets is faster as the temperature of the liquid droplets is higher. In the case where liquid droplets are evaporated inside the compressor, as the evaporation position is closer to the inlet of the compressor, the cooling effect of the evaporation is more influenced on the latter stage, so that a power-reducing effect is enhanced, and the efficiency of the power generation equipment as a whole is enhanced.

<Characteristic features of this Example>

In this Example, solar thermal energy is utilized as a heat source for the high-pressure hot water used as atomization water, so that there is no need for any special heat source for producing the high-pressure hot water. In addition, since the atomizer in this Example is for making liquid droplets finer by reduced-pressure boiling, there is no need for any special atomizer for producing fine liquid droplets.

Incidentally, in relation to a gas turbine power-generating system based on the HAT cycle, the above-mentioned Patent Document 2 discloses an invention in which an atomizer utilizing reduced-pressure boiling is installed at an inlet to a compressor. However, a heat source for atomization water in Patent Document 2 is provided by use of an apparatus (a back end cooler at the compressor outlet, a humidifier for humidifying compressed air, a heat-exchanger for heating humidification water in the humidifier, or the like) which is present in a regenerative cycle and which is intrinsic of the regenerative cycle. Specifically, in Patent Document 2 the object cycle to be treated is a regenerative cycle, and a line configuration wherein high-pressure hot water is produced in the cycle is provided, so that the high-pressure hot water produced in the cycle can be utilized also as atomization water.

In a gas turbine cycle (for example, a simple cycle wherein a cycle configuration is composed only of three elements, that is, a compressor, a combustor, and a turbine) not originally provided with any apparatus for producing high-pressure hot water in its own cycle as just-mentioned, a heat source for high-pressure hot water used as atomization water is the turbine exhaust gas; therefore, a large modification must be made on the gas turbine equipment side. To be more specific, a heat-exchanger for recovery of exhaust heat from the gas turbine exhaust gas, a water supply line for supplying an atomizer with high-pressure hot water produced by the heat-exchanger, or the like must be added.

In addition, both a co-generation system wherein steam (heat) is generated together with electricity and a combined cycle wherein a gas turbine and a steam turbine are combined with each other are systems based on a presumption that the exhaust heat from the gas turbine is used as a heat source for generation of steam. In these systems, the heat balance of the system as a whole is designed based on the calorific value necessary for steam generation. If the gas turbine exhaust heat is utilized for producing high-pressure hot water for atomization into intake air, therefore, the heat balance of the system as a whole may be changed, which may influence the production of steam intended originally. Accordingly, a system configuration in which utilization of gas turbine exhaust heat would cause a change in the heat balance of the gas turbine is undesirable. Therefore, in applying a gas turbine to a solar heat utilizing system, it is desirable to avoid such a system configuration as to cause a change in heat balance, and to minimize modifications to be made in a standard configuration of the gas turbine apparatus itself.

In this Example, on the other hand, solar thermal energy is used as a heat source for high-pressure hot water. In applying a gas turbine to a solar thermal power-generating system, therefore, a modification to a standard configuration of a gas turbine apparatus can be held down to a minimum. Specifically, an apparatus configuration to be newly added is only an atomizer installed on the upstream side of the compressor (in an air intake chamber or an air intake duct). From the viewpoint of heat balance, in addition, the high-pressure hot water is not produced by utilizing the heat in a gas turbine cycle but can be produced irrespectively of the gas turbine apparatus side. Therefore, no change is brought about in the heat balance. This can be provided by the system configuration wherein solar heat is utilized for intake air introduced to the compressor, which is located on the most upstream side of the gas turbine apparatus side.

As above-mentioned, in this Example, the high-pressure hot water produced by solar heat is applied to the atomizer which sprays liquid droplets into the intake air led to the compressor, thereby cooling the intake air, and the energy possessed by the high-temperature water is utilized for making finer the liquid droplets sprayed by the atomizer. Especially, making the sprayed liquid droplets finer is provided, in principle, by reduced-pressure boiling of the high-temperature water.

According to this Example, by the aforementioned system, a power-generating system is provided wherein it suffices to collect solar heat in a quantity corresponding to the sensible heat for producing the high-pressure hot water (the calorific value for causing a temperature change without causing any change in the state of a substance). Therefore, it is possible to eliminate the need for a large quantity of energy as evaporation latent heat, which has been indispensable in the systems according to the related art. As a result, the number of heat collectors which have been installed for collecting a large quantity of thermal energy and the installation area for the heat collectors can be greatly reduced.

To be more specific, the installation area for heat collectors per output generated can be reduced to not more than 1/10 times the value in the related art. Besides, the number of the heat collectors, accounting for most of the cost in a solar heat utilizing system, can be reduced and, hence, a drastic reduction in cost can be promised.

In addition, according to this Example, solar heat is utilized as energy for lowering the compressor inlet air temperature. Therefore, power generator output can be enhanced without increasing $CO_2$, which is a greenhouse effect gas, and it is possible to provide a power-generating system that is favorable from the viewpoint of environmental conservation. No need for any special atomizer for producing fine liquid droplets. Besides, the atomizers in this Example are of the type in which liquid droplets are made finer by use of the principle of reduced-pressure boiling, and solar heat is utilized as energy therefor. This makes it possible to reduce necessary power, as compared with atomizers of the general type. Further, since the liquid droplets can be made much finer by the reduced-pressure boiling, it is possible to greatly reduce the quantity of drain discharged, and to efficiently enhance the output.

Furthermore, surplus solar heat can be stored, and the stored heat can be used to produce hot water when available calorific value is insufficient. Therefore, stable hot-water temperature and hot-water quantity can be provided, and a gas turbine output-increasing effect can be maintained.

EXAMPLE 2

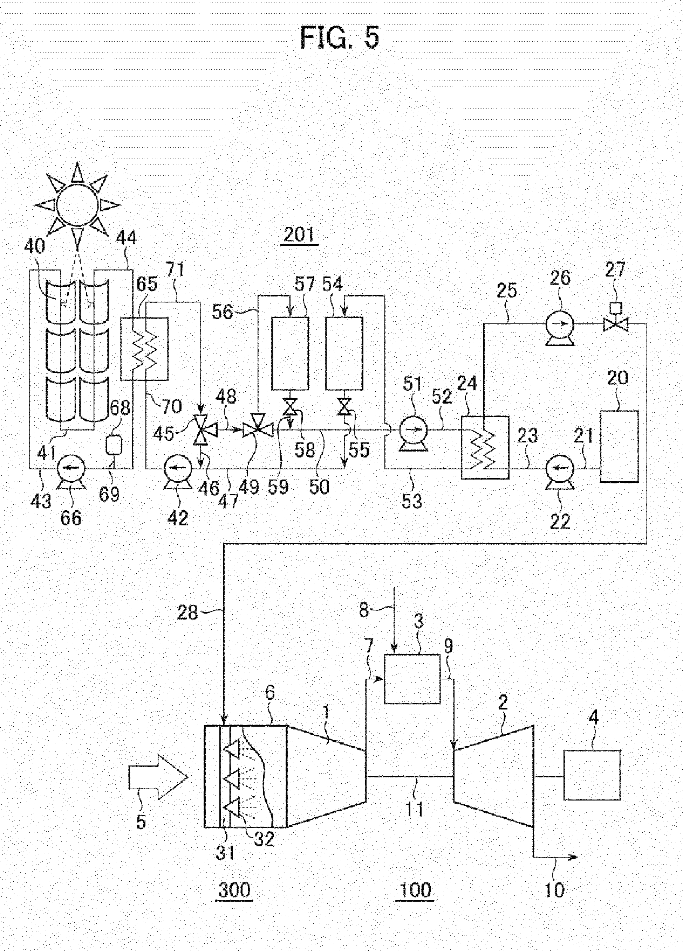

Now, a configuration in Example 2 of the present invention will be described below, referring to FIG. 5.

FIG. 5 is characterized in that an oil/oil heat-exchanger 65 and an oil circulating pump 66 and an expansion tank 68 are provided, in order to suppress variations in response to variations in solar radiation in Example 1 shown in FIG. 1. In addition, the system includes a first line for circulating a first heating medium raised in temperature by a heat collector, a first heat-exchanger for heat exchange between the first heating medium and a second heating medium, a second line for circulating the second heating medium for heat exchange with the first heating medium, and a second heat-exchanger for heat exchange between the second heating medium and water, wherein hot water produced in the second heat-exchanger is supplied to atomizers. This system differs in system configuration from that shown in FIG. 1, as follows.

The heat collector 201 mainly includes sunlight-collection plates 40 for collecting sunlight, a heat collection tube 41 for heating a heating medium by the sunlight collected optically and thermally by the sunlight-collection plates 40, the oil/oil heat-exchanger 65, a high-temperature oil storage tank 57, and a low-temperature oil storage tank 54. It is to be noted that an oil circulating pump 66 for supplying an oil as the heating medium is connected to the upstream of the heat collection tube 41 via a piping 43, and the oil heated in the heat collection tube 41 passes through a piping 44 to be led to the oil/oil heat-exchanger 65, and returns via a piping 67 to the oil circulating pump 66. At an intermediate portion of the piping 67, the expansion tank 68 is provided which is connected via a piping 69. The heat of a high-temperature oil supplied through the piping 44 by the oil circulating pump 66 is transferred to the oil supplied through a piping 70 by an oil pump 42. Thereafter, the oil passes through a piping 71, and returns to the oil pump 42 via a three-way valve 45 and through a piping 46 and a piping 47. Further, a piping 48 is connected to the three-way valve 45, and is connected through a next three-way valve 49 and a piping 56 to the high-temperature oil storage tank 57. In addition, a high-temperature heat storage oil pump 51 is connected to the three-way valve 49 via a piping 50. To this piping 50 is connected a piping 59 extended from a bottom portion of the high-temperature oil storage tank 57 by way of a valve 58. An outlet piping 52 of the high-temperature heat storage oil pump 51 is led to an oil/water heat-exchanger 24, and is connected to the low-temperature oil storage tank 54 through a piping 53. Further, the pipeline is connected from a bottom portion of the low-temperature oil storage tank 54 to the piping 47 via a valve 55. On the other hand, water in a water tank 20 is caused to pass through a piping 21 by a water pump 22, to be fed through a piping 23 into the oil/water heat-exchanger 24. The water heated in the oil/water heat-exchanger 24 is passed through an outlet piping 25 of the oil/heat exchanger 24, to be fed through a booster pump 26 and through a flow-regulating valve 27 and a piping 28 to an atomizer main tube 31 of an atomizer 300, which will be described later.

<Operation, Working, Effect>

Now, operation of the Example shown in FIG. 5 will be described below.

When solar radiation conditions are varied, the temperature of the heat collection tube 41 is varied, resulting finally in a variation in the temperature of the water flowing through the piping 25. In order to stably lower the temperature of air 5 sucked by a compressor 1, a reduced-pressure boiling effect is preferably kept constant. In order to realize this, it is necessary to prevent variations in the water temperature in the piping 25, as securely as possible, and it is important to suppress variations in the temperature of the oil on the upstream side.

In FIG. 1, a simple configuration has been shown in which the heat of the oil raised in temperature by the solar heat is transferred to water in the oil/water heat-exchanger 24. In FIG. 5, the oil/oil heat-exchanger 65 is provided, whereby the temperature of the oil flowing through the outlet piping 71 of the oil/oil heat-exchanger 65 is maintained within a predetermined range, by varying the flow rate by the oil circulating pump 66 according to the status of solar heat collection. It is to be noted that although the temperature of the oil flowing through the piping 71 can be controlled also by varying the flow rate in the oil pump 42, the control of oil temperature in the solar heat collection line on the most upstream side means an increase in the number of means for controlling oil temperature, as compared with those operable in the configuration shown in FIG. 1. It is to be noted that surplus heat is stored in the high-temperature oil storage tank 57, like in FIG. 1, and is supplied to the oil/water heat-exchanger 24 as required, for example in the instance of a cloudy weather, so as to stabilize the water temperature in the piping 25, whereby the intake air to be introduced into the compressor 1 can be cooled in a stable manner.

According to this Example, in addition to the effect obtained in Example 1, there is obtained an effect such that the lowering in the output of a gas turbine power-generating system in summer can be stably restrained, without being affected by variations in weather. In addition, an effect of contributing to a reduction in $CO_2$, which is a greenhouse effect gas, can be obtained through enhancement of solar energy utilization factor.

Industrial Applicability

The system according to the present invention can be utilized as a solar assisted gas turbine system.

Description of Reference Symbols

| | |
|---|---|
| 1: | Compressor |
| 2: | Turbine |
| 3: | Combustor |
| 4: | Generator |
| 5: | Air |
| 6: | Air intake duct |
| 7: | Compressed air |
| 8: | Fuel |
| 9: | Combustion gas |
| 10: | Combustion gas emissions |
| 11: | Shaft |
| 20: | Water tank |
| 21, 23, 25, 28, 43, 44, 46, 47, 48, 50, 52, 53, 56, 59, 67, 69, 70, 71: | Piping |
| 22: | Water pump |
| 24: | Oil/water heat-exchanger |
| 26: | Booster pump |
| 27: | Flow-regulating valve |
| 31: | Atomizer main tube |
| 32: | Atomizing nozzle |
| 33: | Liquid droplet |
| 34: | Fluid mixture |
| 35: | Stator blade |
| 36: | Rotor blade |
| 40: | Sunlight-collection plate |
| 41: | Heat collection tube |
| 42: | Oil pump |
| 45, 49: | Three-way valve |
| 51: | High-temperature heat collection oil pump |
| 54: | Low-temperature oil storage tank |
| 55, 58: | Valve |
| 57: | High-temperature oil storage tank |
| 65: | Oil/oil heat-exchanger |
| 66: | Oil circulating pump |
| 68: | Expansion tank |
| 100: | Gas turbine apparatus |
| 200, 201: | Heat collector |
| 300: | Atomizer |

**Claims**

1.  A solar assisted gas turbine system comprising:

     a gas turbine including a compressor which compresses air, a combustor which puts the air compressed by the compressor and a fuel into combustion, and a turbine driven by a combustion gas generated in the combustor;
     a heat collector which collects solar heat and raises the temperature of a heating medium;
     a heat storage tank which stores the heating medium raised in temperature;
     a heat-exchanger which performs heat exchange between the heating medium and water to form hot water; and
     an atomizer which sprays the hot water formed by the heat-exchanger into the air taken into the compressor.

**2.** The solar assisted gas turbine system according to claim 1, wherein
the solar assisted gas turbine system comprises a first line in which to circulate a first heating medium raised in temperature by the heat collector, a first heat-exchanger in which to perform heat exchange between the first heating medium and a second heating medium, a second line in which to circulate the second heating medium subjected to heat exchange with the first heating medium, and a second heat-exchanger in which to perform heat exchange between the second heating medium and water, and
hot water formed by the second heat-exchange is supplied to the atomizer.

**3.** The solar assisted gas turbine system according to claim 1, wherein
the solar assisted gas turbine system comprises a low temperature oil storage tank in which to store a heating medium having undergone heat exchange with water in the heat exchanger.

**4.** The solar assisted gas turbine system according to claim 2, wherein
the solar assisted gas turbine system comprises a circulating pump which circulates the first or second heating medium, and an expansion tank which absorbs a cubical expansion of the first or second heating medium.

**5.** The solar assisted gas turbine system according to claim 1 or 2, wherein
the solar assisted gas turbine system uses an oil as a heating medium.

**6.** The solar assisted gas turbine system according to claim 1, wherein
the solar assisted gas turbine system comprises a three-way valve by which a heating medium passed through the heat collector is switchedly fed into a route for recirculation to the heat collector or a route for supply to the heat-exchanger or the heat storage tank.

**7.** The solar assisted gas turbine system according to claim 2, wherein
the solar assisted gas turbine system comprises a three-way valve by which the second heating medium passed through the first heat-exchanger is switchedly fed into a route for recirculation to the first heat-exchanger or a route for supply to the second heat-exchanger or the heat storage tank.

# FIG. 1

# FIG. 2

# FIG. 3

# FIG. 4

RELATIONSHIP OF WATER TEMPERATURE
WITH SATURATION PRESSURE AND
OPERATING PRESSURE (EXAMPLE)

# FIG. 5

# FIG. 6

# FIG. 7

FIG. 8

# FIG. 9

| | (1) BRAYTON CYCLE | (2) INTERCOOLING CYCLE | (3)EXAMPLE |
|---|---|---|---|
| CYCLE DIAGRAM | | | |
| T–S DIAGRAM | | | |

SPECIFIC OUTPUT: $S_1 < S_2 < S_3$

EP 2 818 665 A1

FIG. 10

## FIG. 11A

HUMIDITY 60% R. H.

RELATIVE VALUE OF OUTPUT (%)

123

100

0    5                    30

INTAKE AIR TEMPERATURE (°C)

## FIG. 11B

GT MAXIMUM OUTPUT

START OF MIXING-IN OF
LIQUID DROPLETS INTO
COMPRESSOR

OUTPUT INCREASE RATIO (%)

30
25
23
20
15
10
5
0

THERMAL EFFICIENCY (%)

37.0
36.7
36.5
36.0
35.7
35.5
35.0

0.35

2.3

0.0    0.5    1.0    1.5    2.0    2.5    3.0

(SPRAYING RATE)/(INTAKE AIR FLOW RATE) (%)

# FIG. 12

**INTERNATIONAL SEARCH REPORT**

| International application No. |
|---|
| PCT/JP2012/001260 |

| A. CLASSIFICATION OF SUBJECT MATTER |
|---|
| *F02C1/05*(2006.01)i, *F02C7/143*(2006.01)i |

According to International Patent Classification (IPC) or to both national classification and IPC

| B. FIELDS SEARCHED |
|---|

Minimum documentation searched (classification system followed by classification symbols)
F02C1/05, F02C7/143, F03G6/00

Documentation searched other than minimum documentation to the extent that such documents are included in the fields searched

| Jitsuyo Shinan Koho | 1922-1996 | Jitsuyo Shinan Toroku Koho | 1996-2012 |
|---|---|---|---|
| Kokai Jitsuyo Shinan Koho | 1971-2012 | Toroku Jitsuyo Shinan Koho | 1994-2012 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y<br>A | JP 2009-41567 A (General Electric Co.),<br>26 February 2009 (26.02.2009),<br>paragraph [0021]; fig. 5<br>& US 2009/0038313 A1     & DE 102008002987 A<br>& CN 101363367 A | 1,3,5,6<br>2,4,7 |
| Y | JP 2011-214829 A (Kawasaki Heavy Industries, Ltd.),<br>27 October 2011 (27.10.2011),<br>paragraphs [0003], [0054] to [0055]; fig. 4<br>(Family: none) | 1,3,5,6 |
| Y | US 6000211 A (YORK RESEARCH CORP.),<br>14 December 1999 (14.12.1999),<br>column 2, lines 43 to 67; column 6, lines 15<br>to 24; fig. 4<br>(Family: none) | 1,3,5,6 |

| ☒ Further documents are listed in the continuation of Box C. | | ☐ See patent family annex. |
|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 March, 2012 (15.03.12) | 03 April, 2012 (03.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/001260

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 58-185911 A  (Hitachi, Ltd.),<br>29 October 1983 (29.10.1983),<br>page 2, upper right column, line 19 to lower<br>left column, line 13; fig. 4<br>(Family: none) | 3,6 |
| Y | JP 2007-529664 A  (UESTUEN, Orhan),<br>25 October 2007 (25.10.2007),<br>paragraphs [0029] to [0030]; fig. 1<br>& US 2009/0064680 A1    & EP 1733144 A<br>& WO 2005/088123 A1    & CA 2559907 A<br>& CN 1926331 A | 3 |
| Y | JP 2011-220329 A  (Alstom Technology Ltd.),<br>04 November 2011 (04.11.2011),<br>paragraph [0035]<br>(Family: none) | 5 |
| A | JP 2008-121483 A  (Kawasaki Heavy Industries,<br>Ltd.),<br>29 May 2008 (29.05.2008),<br>paragraphs [0028] to [0039]; fig. 1<br>& US 2009/0320828 A1    & EP 2090777 A2<br>& WO 2007/073008 A2 | 1-7 |
| A | JP 57-146067 A  (Director General, Agency of<br>Industrial Science and Technology),<br>09 September 1982 (09.09.1982),<br>page 3, lower left column, line 16 to page 4,<br>lower left column, line 4; fig. 4<br>(Family: none) | 1-7 |

Form PCT/ISA/210 (continuation of second sheet) (July 2009)

**EP 2 818 665 A1**

**REFERENCES CITED IN THE DESCRIPTION**

**Patent documents cited in the description**

- JP 2008039367 A
- JP 2001214757 A
- JP HEI610702 B